# EUROPEAN PATENT APPLICATION

(11) **EP 2 977 721 A1**
(43) Date of publication of application: **27.01.2016**
(21) Application number: 13879239.5
(22) Date of filing: 10.12.2013
(51) Int. Cl.: G01C 19/02

(54) **GYROSCOPIC REFERENCE SYSTEM**

(30) Priority: 22.03.2013 RU 2013112756
(71) Applicant: Gazhur, Vyacheslav Pavlovich, Moscow 117556 (RU)
(72) Inventor: Gazhur, Vyacheslav Pavlovich, Moscow 117556 (RU)
(74) Representative: Jeck, Anton
(86) International application number: PCT/RU2013/001103
(87) International publication number: WO 2014/148946

(57) **Abstract**

Die Erfindung ist im Maschinenbau, und zwar in Triebwerken für Fahrzeuge mit verschiedenen Bestimmungszwecken einsetzbar. Das Referenz-Kreiselsystem zur Erzeugung von Referenzmomenten im Raum besteht aus einem Schwinglenker (1), wobei der Schwinglenker (1) in einem Sektor schwingt, der an einer Seite mittels eines Anschlags (11) begrenzt ist, und wobei an den Enden des Schwinglenkers (1) zwei gebundene Gyroskope (2, 3) befestigt sind, dadurch gekennzeichnet, dass die Gyroskope (2, 3) drehbare Schwungräder mit verschiedenen Kreiselmomenten darstellen. Die Antriebsachsen der Gyroskope (2, 3) sind entlang einer geometrischen Längsachse des Schwinglenkers (1) angebracht. Ein Schubgerüst des Gyroskops (2) mit einem kleineren Kreiselmoment ist unbeweglich befestigt, und ein Schubgerüst des Gyroskops (3) mit einem größeren Kreiselmoment ist um seine Antriebsachse drehbar befestigt. Eine Schwenkachse ist mittig des Schwinglenkers (1) und normal dazu und zur Drehachse des Schwungrads des unbeweglich befestigten Gyroskops (2) und des den Schwenkwinkel des Schwinglenkers (1) begrenzenden Anschlags (11) angeordnet. Der technische Effekt ist die Sicherstellung einer vielseitigen Anwendbarkeit, die Erhöhung des Wirkungsgrads und die Verbesserung der Betriebseigenschaften.

## Description

Die Erfindung betrifft ein Referenz-Kreiselsystem nach dem Oberbegriff des Anspruchs.

Die Erfindung ist im Maschinenbau, und zwar in Triebwerken für Fahrzeuge mit verschiedenen Bestimmungszwecken einsetzbar.

Aus dem Stand der Technik ist ein gyroskopisches Triebwerk (Kreiseltriebwerk) bekannt, welches einen Unterbau und wenigstens ein darauf aufgebautes Paar von Kreiseleinrichtungen aufweist. Die Kreiseleinrichtungen sind zum Massenmittelpunkt des Triebwerks symmetrisch angeordnet. Dabei umfasst jede Kreiseleinrichtung ein Gehäuse, einen Rotationskörper in Form eines Gerüsts (Rahmen), einen Gerüst-Rotationsantrieb und ein Gyroskop. Die Rotationsachse des Gerüsts ist auf dem Gehäuse gelagert. Der Gerüst-Rotationsantrieb ist auf dem Gehäuse befestigt. Das Gyroskop ist am Gerüst gelagert und zwar so, dass die Rotationsachsen des Gerüsts und des Gyroskops normal zueinander verlaufen. Das Gyroskop jeder Kreiseleinrichtung weist je zwei Läufer, die entgegengesetzt drehbar eingebaut sind, und einen zusätzlichen Rotationsantrieb der Läufer des Gyroskops auf (RU 2007110755).

Diese bekannte Einrichtung ist dadurch bemängelt, dass es nicht möglich ist, sie als eine Referenz-Kreiseleinrichtung zu benutzen, da die Gyroskope je zwei Läufer haben, die sich gegenläufig drehen. Diese Bauweise macht die Einrichtung funktionsunfähig.

Es ist Aufgabe der Erfindung, den erforderlichen technischen Effekt zu erreichen, wobei der technische Effekt eine Sicherstellung zur vielseitigen Anwendbarkeit, eine Erhöhung des Wirkungsgrads und eine Verbesserung der Betriebseigenschaften umfasst.

Die gestellte Aufgabe wird durch die Merkmale des Anspruchs gelöst.

Der technische Effekt ist dadurch erreicht:

Das Referenz-Kreiselsystem (gyroskopische Referenz-System) stellt die Möglichkeit sicher, dass Referenzmomente im Raum erzeugt werden. Das Referenz-System besteht aus einem Schwinglenker mit zwei Gyroskopen. Der Schwinglenker schwingt in einem Sektor, der an einer Seite mittels eines Anschlags begrenzt ist. Die zwei gebundenen Gyroskope sind an den Enden des Schwinglenkers befestigt. Die Gyroskope stellen drehbare Schwungräder mit verschiedenen Kreiselmomenten dar. Dabei sind die Antriebsachsen der Gyroskope entlang einer geometrischen Längsachse des Schwinglenkers angebracht. Ein Gerüst des Gyroskops mit einem kleineren Kreiselmoment ist unbeweglich befestigt. Ein Gerüst des Gyroskops mit einem größeren Kreiselmoment ist um seine Antriebsachse drehbar befestigt. Die Schwenkachse ist mittig des Schwinglenkers und normal dazu und zur Drehachse des Schwungrads des unbeweglich befestigten Gyroskops und des den Schwenkwinkel des Schwinglenkers begrenzenden Anschlags angeordnet.

Die genannten Merkmale sind wesentlich und zusammenhängend. Dabei ist eine beständige Gesamtheit der wesentlichen Merkmale gebildet. Diese Gesamtheit reicht dafür aus, um den technischen Effekt zu erreichen.

Die Erfindung wird anhand eines in den beiliegenden Zeichnungen dargestellten Ausführungsbeispiels näher erläutert. Es zeigen:
- Fig. 1: ein Übersichtsbild des Referenz-Kreiselsystems,
- Fig. 2: die Funktionsphasen der Einrichtung, wenn die Hauptachse um 360° schwenkt,
- Fig. 3: die Kraft- und Momentverteilung am Schwinglenker und an der Hauptachse, wenn der Schwinglenker gegen den Anschlag gepresst ist,
- Fig. 4: das Übersichtsbild einer Anlage, die aus zwei vorgeschlagenen Einrichtungen besteht und
- Fig. 5: das Übersichtsbild eines Triebwerks mit zwei Anlagen, die Referenzmomente im Raum erzeugen.

Die angeführten Figuren zeigen Bauelemente mit entsprechenden Bezugszeichen zur Realisierung eines Referenz-Kreiselsystems nach der Erfindung.

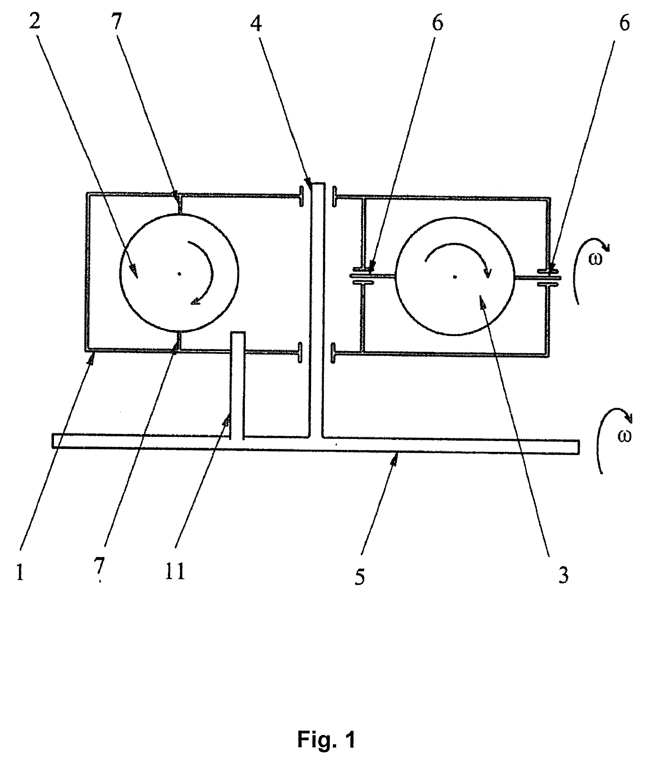

Die Einrichtung besteht aus (s. Fig. 1) einem Schwinglenker 1 in Form eines Schubgerüsts, gebundenen Gyroskopen 2 und 3, einer Schwenkachse 4, einer Hauptachse 5 und einem Anschlag 11. Das Gerüst des Gyroskops 2 ist in einem Schwinglenker 1 an den Punkten 7 befestigt. Das Gerüst des Gyroskops 3 bewegt sich an den Punkten 6 um den Schwinglenker 1. Der Anschlag 11 verhindert, dass der Schwinglenker 1 über die Grenzen der Längslinie der Hauptachse 5 ausschwingt, wenn der Schwinglenker 1 sich entgegengesetzt zur Rotationsrichtung (Drehrichtung) der Hauptachse 5 bewegt. Die mechanische Untersetzung von der Hauptachse 5 an das Gyroskop 3 in Form von Zahnradgetrieben und Gleichganggelenken sowie Kontaktvorrichtungen zur Stromübertragung an die Gyroskope sind nicht abgebildet.

Weiter unten wird ein Beispiel einer konkreten Ausführung der vorliegenden Erfindung betrachtet.

Der Schwinglenker 1 ist mit den Lagern auf der Schwenkachse 4 gelagert. Die Schwenkachse 4 wird mit ihrer Rückseite unbeweglich an der Hauptachse 5 normal dazu befestigt (s. Fig. 1 - 5). Das Gyroskop 3 dreht sich mechanisch über die Getriebe und die Gleichganggelenke in derselben Richtung und mit derselben Winkelgeschwindigkeit wie die der Hauptachse 5. Somit macht das Gyroskop 3 pro eine Wendung der Hauptachse 5 um 360° eine Umdrehung um 360° zum Schwinglenker 1 und um 720° im Raum.

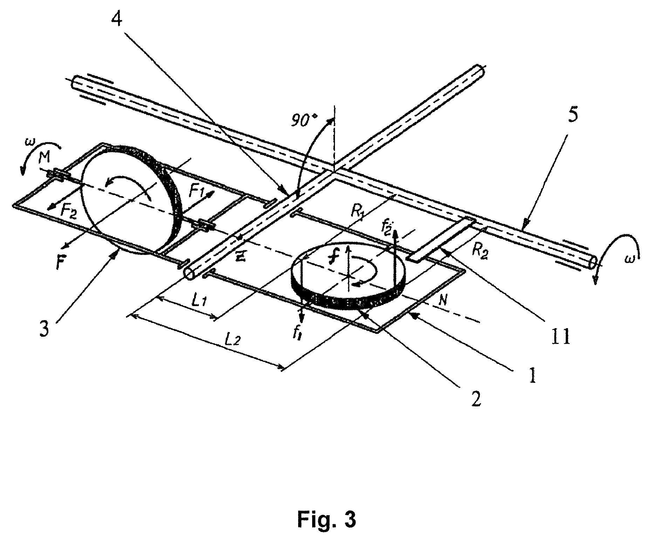

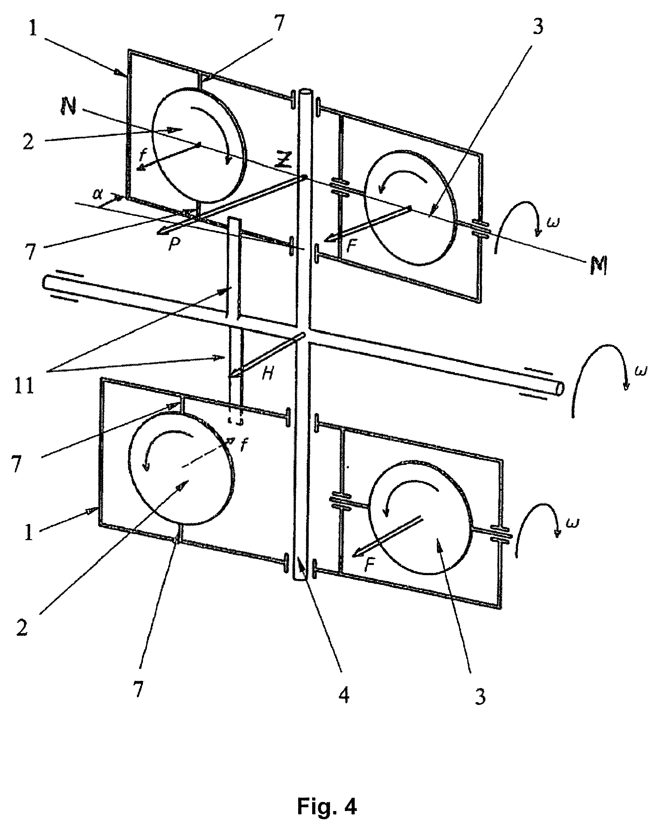

Gleichzeitig macht das Gyroskop 2, dessen Gerüst befestigt ist, eine Wendung um 360° im Raum (s. Fig. 3 und 4). Das Kreiselmoment von Gyroskop 3 muss wenigstens vierfach höher sein als das von Gyroskop 2. Das wird durch ein größeres Gewicht des Läufers (des Schwungrads) und die doppelte Drehgeschwindigkeit um die Antriebsachse sichergestellt. Während der Drehung der Hauptachse 5 auf dem Schwungrad des Gyroskops 2 entsteht ein Kreiselmoment f infolge einer erzwungenen Präzession. Der Vektor dieses Kreiselmoments ist immer gegen die Bewegungsrichtung (Drehrichtung) der Hauptachse 5 gerichtet. Dieses Verhältnis ist durch die entsprechenden Drehrichtungen der Hauptachse 5 und des Schwungrads des Gyroskops 2 bedingt, s. Fig. 3. Der Anschlag 11 verhindert, dass der Schwinglenker 1 sich über die Mittellinie der Hauptachse 5 bewegt. Gleichzeitig entsteht das Kreiselmoment F infolge der erzwungenen Präzession im Gyroskop 3. Der Momentenvektor F ist aufgrund der Rotation des Gerüsts von Gyroskop 3 im Schwinglenker 1 (s. Fig. 1, 3, 4) uneinheitlich gerichtet. Die Einrichtung muss zur Schwenkachse 4 statisch ausgeglichen sein.

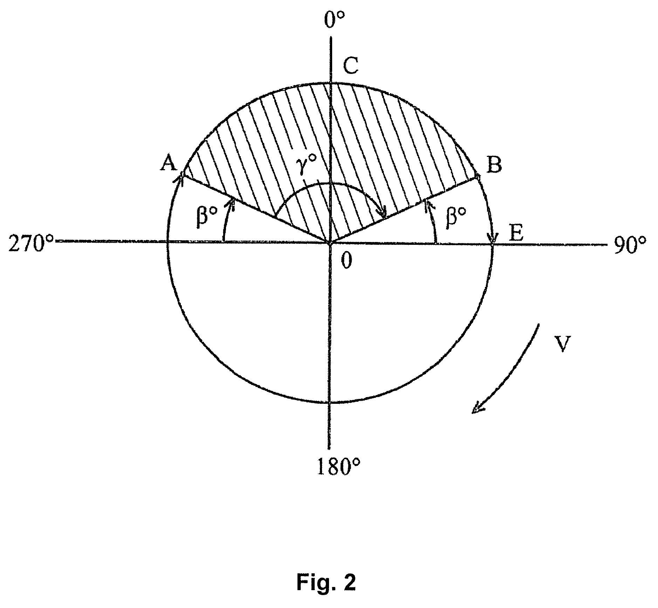

Während der Drehung der Hauptachse 5 kann die Funktion der Einrichtung in folgende Perioden (Zyklen) aufgeteilt werden, s. Fig. 2.

Punkt A - Anfang des Arbeitsgangs. Bis zu diesem Zeitpunkt ist der Schwinglenker 1 mit der Kraft f vom Gyroskop 2 gegen den Anschlag 11 gepresst. Das Gyroskop 3 wendet im Schwinglenker 1, und eine Komponente seines Vektors F ist größen- und richtungsmäßig mit dem Vektor f identisch. Ab diesem Zeitpunkt wandert der Schwinglenker 1 von dem Anschlag 11 ab. Dann nimmt die Winkelgeschwindigkeit beim Wenden des Schwinglenkers 1 zu und erreicht ihren Spitzenwert im Punkt C. Der Vektor F ist gleichläufig mit dem Vektor f ausgerichtet, und das Kräfteverhältnis F zu f ist maximal, s. Fig. 4. Bei der weiteren Wendung der Hauptachse 5 setzt das Gerüst des Gyroskops 3 seine Drehung im Schwinglenker 1 fort. Die Komponente des Vektors F nimmt ab, die Winkelgeschwindigkeit beim Wenden des Schwinglenkers 1 wird allmählich kleiner. Im Punkt B, wenn die Komponente des Vektors F von Gyroskop 3 richtungs- und größenmäßig mit dem Vektor f von Gyroskop 2 identisch wird, wird diese Winkelgeschwindigkeit gleich Null sein. Der Arbeitsgang ist abgeschlossen.

Ein Sektor des Arbeitsgangs wird wie folgt definiert:

| | |
|---|---|
| sin β° = f:F | γ°=180°-2β° |

mit γ° - Arbeitssektor (s. Fig. 2).

Dann beginnt der Schwinglenker 1 unter der Einwirkung der Kraft f des Gyroskops 2 die Rückbewegung zum Anschlag 11 hin. Im Punkt E presst sich der Schwinglenker 1 gegen den Anschlag 11. Die jeweilige Stellung der Gyroskope 2 und 3, des gegen Anschlag 11 angepressten Schwinglenkers 1 (Punkt E, Fig. 2), ist in Fig. 3 dargestellt. Von Punkt E bis Punkt A läuft der Zyklus mit dem gegen den Anschlag 11 gepressten Schwinglenker 1 ab. Ab Punkt A werden alle Perioden (Zyklen) wiederholt.

Die Funktionsweise der erfindungsgemäßen Einrichtung ist in den beschriebenen Sektoren unterschiedlich. Im Arbeitsgang-Sektor (s. Fig. 2, 4 - oben) sind die Kraft F von Gyroskop 3 und die Kraft f von Gyroskop 2 an den entgegengesetzten Enden des Schwinglenkers 1 aufgebracht, und ihre Vektoren sind gleichläufig gerichtet, und zwar gegen die Drehrichtung der Hauptachse 5.

Das Gyroskop 3 mit der Kraft F überwindet die Kraft f von Gyroskop 2 und dreht den Schwinglenker 1 um einen Winkel *α*, indem es sich auf die Schwenkachse 4 im Punkt Z stützt.

Der Schwinglenker 1 wirkt auf die Schwenkachse 4 mit der Kraft P. Diese Kraft P hängt von der Größe der Kreiselmomente F und *f* ab. Die Kraft F (oder ihre Komponente) ist im Arbeitssektor immer höher als die Kraft f. Das bedeutet, dass der Schwinglenker 1 sich mit einer Beschleunigung wenden wird.

Alle infolge der erzwungenen Präzession der Gyroskope 2 und 3 entstehenden Kreiselmomente sind an der Linie MN aufgebracht, die über die Drehmittelpunkte der Schwungräder verläuft und die Schwenkachse 4 im Punkt Z kreuzt (s. Fig. 4). Die Kraft P entsteht im Punkt Z auf der Schwenkachse 4 im Arbeitssektor. Dieser Punkt Z liegt in einem bestimmten Abstand zu der sich drehenden Hauptachse 5. Die Überwindung dieser Kraft P ruft die Entstehung einer Kraft H hervor, die an der Hauptachse 5 aufgebracht wird, und führt dazu, dass die gesamte Anlage sich in Richtung des Vektors H bewegt.

Im arbeitsfreien Sektor (s. Fig. 2 - Punkt E, Fig. 3) ist der Schwinglenker 1 gegen den Anschlag 11 mit der Kraft f von Gyroskop 2 gepresst. Der Vektor der Kraft F von Gyroskop 3 ist entlang der Schwenkachse 4 ausgerichtet und hat keine Wirkung auf den Schwinglenker 1. Bei dieser Lage erzeugen die Kräfte f₁ und f₂ Momente f₁L₁ und f₂L₂. Die Kräfte f₁ und f₂ entstehen infolge einer Präzession an den Rändern des Schwungrads des Gyroskops 2 an den Schnittpunkten mit der MN-Linie (Geraden), die parallel zur Hauptachse 5 und über die Mittelpunkte der Schwungräder der Gyroskope 2 und 3 und den Punkt Z auf der Schwenkachse 4 verläuft. Dabei ist f₁ = f₂ und L₂>L₁, f₂L₂>f₁L₁. Das stellt sicher, dass der Schwinglenker 1 gegen den Anschlag 11 gepresst wird und dass ein einheitliches System mit einer Hauptachse 5 gebildet wird.

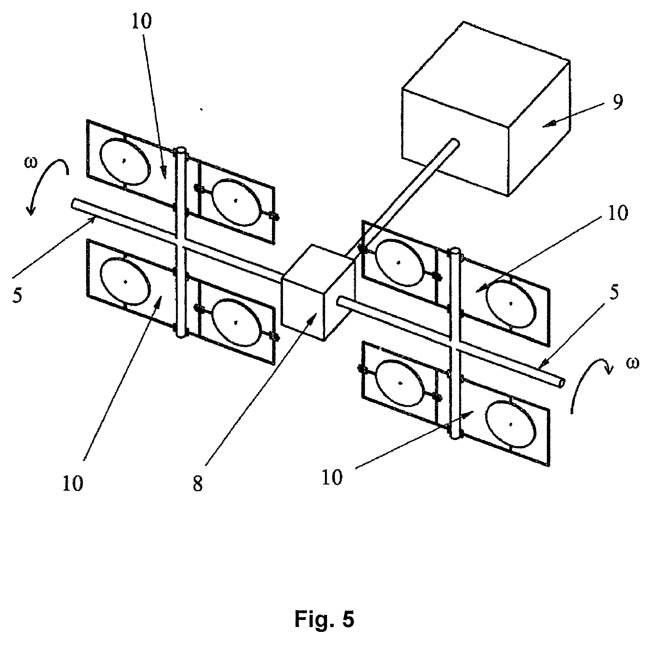

Dabei entstehen Momente f₁R₁ und f₂R₂ mit R = dem Abstand zwischen der MN-Linie und der Hauptachse 5. Aber da f₁=f₂ und gegenläufig sind und R₁=R₂, sind die Momente f₁R₁ und f₂R₂ größengleich und gegenläufig gerichtet und haben keinen Einfluss (Gegenwirkung) auf die Drehung der Hauptachse 5. Diese Regel gilt über den gesamten arbeitsfreien Sektor von Punkt E bis Punkt A (s. Fig. 2) unabhängig von der Lage des Gyroskops 3 im Schwinglenker 1. In diesem Fall, wenn die Vektoren f und F der Gyroskope 2 und 3 uneinheitlich gerichtet sind und gemeinsam den Schwinglenker 1 gegen den Anschlag 11 (Fig. 4) pressen, bleibt die Gleichheit aller Momente und ihre Gegenläufigkeit erhalten. Eine Anlage mit zwei Einrichtungen 10 (Fig. 5) und einer Hauptachse 5 muss dynamisch ausgeglichen werden.

Das erfindungsgemäße Referenz-Kreiselsystem ist ein geschlossenes System mit eigener eingebauter Stromversorgung. Sie ist von der Umgebung isoliert. Das Referenzmoment entsteht nur während des Schwingens des Schwinglenkers 1 im Arbeitsgangsektor. Im arbeitsfreien Sektor ist der Schwinglenker 1 gegen den Anschlag 11 gepresst und bildet zusammen mit der Hauptachse 5 ein neues System, welches die Erzeugung von Referenzmomenten verhindert.

Um alle während der Entwicklung der Erfindung entstehenden Fragen zu prüfen und abzuarbeiten, wurde ein Prüfstand gebaut. Bei diesem Prüfstand wurden anstelle der Gyroskope hochdrehzahlige Winkelschleifer (Handtrennschleifmaschinen) mit einer Leistung von 1,3 kW eingesetzt. Anstelle der Schwungräder wurden 800 g schwere Metalltrennscheiben mit einem Durchmesser von 230 mm und einer Drehzahl von 100 U/Sek. benutzt.

Der Fig. 5 ist ein Übersichtsbild eines Mehrzweck-Triebwerks auf der Basis eines Referenz-Kreiselsystems zu entnehmen. Das Triebwerk besteht aus zwei Hauptachshälften 5, die sich gegenläufig über ein Getriebe 8 mit Hilfe eines Motors 9 drehen. Der Motor 9, das Getriebe 8, die Achshälften und die Schwenkachse bilden ihr eigenes geschlossenes System. Je zwei Schwenkachsen 5 mit Kreisel-Systemen 10 werden auf jeder Achshälfte befestigt. Dabei stellen die Kreisel-Systeme 10 geschlossene Einzelsysteme dar.

Zwei koaxiale Hauptachshälften 5 drehen sich gegenläufig und beseitigen die entstehenden Rückstellmomente, und die eventuelle Vergrößerung der Menge von Referenzsystemen erhöht den Wirkungsgrad und erleichtert die Auswuchtung des Triebwerks.

Die vorliegende Erfindung ist gewerblich anwendbar und kann unter Einsatz von Vorrichtungen, Bauteilen und -gruppen gefertigt werden. Die Einrichtung bereitet keine Schwierigkeiten bei der Fertigung und kann gewerblich in die Praxis umgesetzt und für Maschinenbauzwecke genutzt werden.

## Claims

1. Referenz-Kreiselsystem zur Erzeugung von Referenzmomenten im Raum, das aus einem Schwinglenker (1) besteht, wobei der Schwinglenker (1) in einem Sektor schwingt, der an einer Seite mittels eines Anschlags (11) begrenzt ist, und wobei an den Enden des Schwinglenkers (1) zwei gebundene Gyroskope (2, 3) befestigt sind,
**dadurch gekennzeichnet,**
**dass** die Gyroskope (2, 3) drehbare Schwungräder mit verschiedenen Kreiselmomenten darstellen,
**dass** die Antriebsachsen der Gyroskope (2, 3) entlang einer geometrischen Längsachse des Schwinglenkers (1) angebracht sind,
**dass** ein Schubgerüst des Gyroskops (2) mit einem kleineren Kreiselmoment unbeweglich befestigt ist und
**dass** ein Schubgerüst des Gyroskops (3) mit einem größeren Kreiselmoment um seine Antriebsachse drehbar befestigt ist, wobei darüber hinaus eine Schwenkachse mittig des Schwinglenkers (1) und normal dazu und zur Drehachse des Schwungrads des unbeweglich befestigten Gyroskops (2) und zu dem den Schwenkwinkel des Schwinglenkers (1) begrenzenden Anschlag (11) angeordnet ist.
